# EUROPEAN PATENT SPECIFICATION

(11) **EP 3 011 773 B1**
(45) Date of publication and mention of the grant of the patent: **27.12.2017**
(21) Application number: 13730530.6
(22) Date of filing: 18.06.2013
(51) Int. Cl.: H04W 28/20, H04W 88/08

(54) **METHOD AND APPARATUS IN A BASE STATION FOR CONTROLLING COMMUNICATION RESOURCES TO A PLURALITY OF ANTENNA SITES OF THE BASE STATION**
VERFAHREN UND VORRICHTUNG IN EINER BASISSTATION ZUR STEUERUNG VON KOMMUNIKATIONSRESSOURCEN FÜR MEHRERE ANTENNENPUNKTE DER BASISSTATION
PROCÉDÉ ET APPAREIL DANS UNE STATION DE BASE POUR COMMANDER DES RESSOURCES DE COMMUNICATION AU NIVEAU D'UNE PLURALITÉ DE SITES D'ANTENNE DE LA STATION DE BASE

(43) Date of publication of application: 27.04.2016
(73) Proprietor: Telefonaktiebolaget LM Ericsson (publ), 164 83 Stockholm (SE)
(72) Inventor: LU, Chenguang, S-191 63 Sollentuna (SE); BERG, Miguel, S-194 67 Upplands Väsby (SE); ERIKSSON, Per-Erik, S-116 37 Stockholm (SE); JOHANSSON, Rune, S-194 36 Upplands Väsby (SE); THOREBÄCK, Johan, S-174 62 Sundbyberg (SE); TROJER, Elmar, S-187 54 Täby (SE)
(74) Representative: Ericsson
(86) International application number: PCT/EP2013/062628
(87) International publication number: WO 2014/202124

(56) References cited:
- EP-A1- 1 924 109
- US-A- 5 794 153
- US-B1- 7 961 618

## Description

### Technical field

The present disclosure relates generally to a method performed by an apparatus of a base station in a wireless communication system for controlling communication resources to a plurality of antenna sites of the base station. The disclosure further relates to a corresponding apparatus operable in a base station, a computer program and a computer program product.

### Background

In wireless communication systems, it has been estimated that 80% of the radio traffic takes place inside of buildings, such as offices, hotels, conference centers, shopping malls, hospitals, universities etc. There is a very high demand from both operators and end users to increase both the coverage and the capacity indoors. Due to the high penetration loss of the walls and floors of the buildings, it is difficult to offer a good coverage and high capacity inside the buildings relying on the radio signals from outside the buildings, i.e. from the outdoor base stations. Specialized radio systems deployed inside the buildings are needed to fit the indoor environments.

In the following are some basic requirements for indoor system deployment: The indoor antennas need to have low output power due to regulations and health concerns. This requires that the antenna output power is as low as 10-20 dBm. The indoor antennas are densely deployed to achieve high Signal to Noise Ratio, SNR, and thus provide high bit rates to users. The complicated indoor propagation environment, i.e. rather high path loss due to shadowing effects from interior walls, also motivates the dense deployment for a good coverage. The typical distance between antennas is as short as 10-20 meters.

Indoor traffic is characterized by uneven traffic distribution in space. This creates traffic hotspots in local areas, e.g. conference rooms, cafeterias, lobbies etc., i.e. where many users are gathering together. Traffic density of such a hotspot is very high while traffic density of another area is rather low at the same time. Furthermore, the hotspot locations change over time. For example, traffic is more concentrated in the cafeterias during meal time while it is more concentrated in conference rooms during meeting time. However, the overall traffic density in the whole area is much lower than the peak density in the hotspots.

One way to increase the capacity is cell split by reducing the cell size to allow more spatial reuse in the area. Furthermore, advanced radio technologies like coordinated multi-point, CoMP, and multi-user Multiple Input Multiple Output, MU-MIMO, have emerged to further increase network capacity. With the new technologies, signals from/to different antennas can be jointly processed and thereby interference can be cancelled or mitigated. This allows more simultaneous data flows from/to different users in one area without much interference. In a local area with many antennas and many users, asymptotically, the network capacity is proportional to the number of the jointly processed signals from/to different antennas.

The signals (both jointly processed and separately processed) are processed by a digital unit, DU, also called a baseband processing unit, BBU, which is often referred to as a part of a base transceiver station, BTS, also called base station. The baseband processing resources in the BBU required are basically proportional to the number of the baseband signals, also called IQ data flows, for processing. The transport of signals between antennas and the BBU is usually referred to as front haul. At the antenna, the signals are radio frequency, RF, signals in analog form. At the BBU, the signals can be RF/intermediate frequency, IF, signals in analog form or baseband/IF signals in digital form, e.g. Common Public Radio Interface, CPRI, for baseband signals. CPRI is a front haul protocol which is capable of encapsulating multiple baseband IQ data flows to one CPRI signal. So the required front haul capacity, e.g. the required bit rate for one CPRI link and the number of CPRI links available, is also proportional to the number of signals transported. The total network capacity can be maximized when full baseband processing capacity and full front haul capacity for all antennas are provided. For a dense deployment with many antennas, this approach over-provides the capacity to the whole area. In practice, the required high costs for such over-capacity prohibits such a full capacity approach. Dynamic bandwidth allocation in a network of antennas for multiple base transceiver stations according to this state of the art is known from US 7961618 B1.

Consequently, a more cost-effective solution of providing communication resources from a BBU to antennas connected to the BBU is needed. Further, such a solution at the same time needs to be able to provide good communication capacity to the antennas.

### Summary

It is an object of the invention to address at least some of the problems and issues outlined above. It is possible to achieve these objects and others by using a method and an apparatus as defined in the attached independent claims.

According to one aspect, a method is provided performed by an apparatus of a base station in a wireless communication system for controlling communication resources to a plurality of antenna sites of the base station, the base station providing communication resources as a number of antenna carriers providing IQ data flows to the plurality of antenna sites. The method comprises estimating traffic load on individual of the plurality of antenna sites and distributing the number of antenna carriers to the plurality of antenna sites based on the estimated traffic load on individual of the plurality of antenna sites.

According to another aspect, an apparatus is provided operable in a base station in a wireless communication system, configured for controlling communication resources to a plurality of antenna sites of the base station, the base station having a baseband unit configured for providing communication resources as a number of antenna carriers providing IQ data flows to the plurality of antenna sites. The apparatus comprises an estimation unit for estimating traffic load on individual of the plurality of antenna sites and a distribution unit for distributing the number of antenna carriers to the plurality of antenna sites based on the estimated traffic load on individual of the plurality of antenna sites.

According to a third aspect, a computer program is provided comprising computer readable code means, which when run in an apparatus of a base station causes the apparatus to perform a number of steps. The base station comprises a plurality of antenna sites and a baseband unit providing communication resources as a number of antenna carriers providing IQ data flows to the plurality of antenna sites. The computer program causes the apparatus to perform the following steps: estimating traffic load on individual of the plurality of antenna sites, and distributing the number of antenna carriers to the plurality of antenna sites based on the estimated traffic load on individual of the plurality of antenna sites.

The above method and apparatus may be configured and implemented according to different optional embodiments. Further possible features and benefits of this solution will become apparent from the detailed description below.

### Brief description of drawings

The solution will now be described in more detail by means of exemplary embodiments and with reference to the accompanying drawings, in which:
Fig. 1 is a schematic block diagram of a wireless communication system comprising a base station according to an embodiment of the invention.
Fig 2 is a schematic geographic scenario of a wireless cellular communication system.
Figs. 3-5 are flow charts illustrating methods in a base station according to possible embodiments.
Figs. 6-8 are schematic block diagrams of base stations, i.e. base station systems, according possible embodiments.
Fig. 9 is a schematic block diagram of an IF Hub according to a possible embodiment.
Fig. 10 is a schematic block diagram of an AAE according to a possible embodiment.
Fig. 11 is a schematic block diagram of a baseband unit according to a possible embodiment.
Fig. 12 is a schematic block diagram of a base station, i.e. a base station system, according possible embodiments.
Figs. 13-15 are flow charts illustrating methods in a base station according to possible embodiments.
Figs. 16-17 are schematic block diagrams of arrangements according to an embodiment.

### Detailed description

Briefly described, a solution is provided to efficiently use communication resources provided by a baseband unit, BBU, of a base station to antenna sites of the base station, the communication resources being called antenna carriers providing IQ data flows for the communication between the baseband unit and the antenna sites. By estimating traffic load on the antenna sites and distributing the antenna carries to the antenna sites based on the estimated traffic load, the antenna carries can be concentrated at the antenna sites where there is lots of traffic for the moment, i.e. at traffic hot spot antenna sites. As a result, by using such a dynamic distribution of antenna carriers depending on the traffic load, the antenna carrier communication resources can be more efficiently used in the communication network.

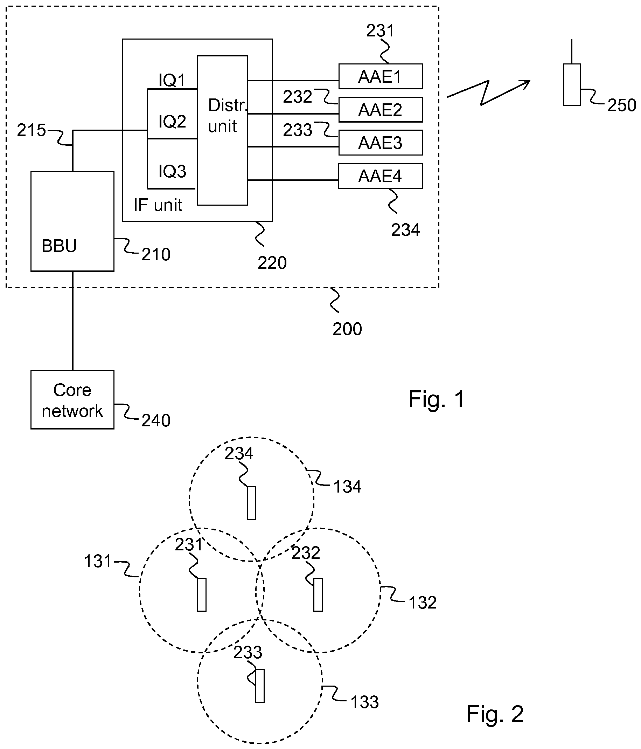

Figure 1 describes a base station 200 according to an embodiment, the base station comprises a baseband unit, BBU, 210 connected to an IF unit 220. The BBU 210 is connected to the IF unit 220 via a link 215 which may be a CPRI link. Baseband signals are communicated over this link as IQ data flows, the IQ data flows are transmitted over communication resources called antenna carriers. The baseband signals are divided from the CPRI link (if CPRI is used) into individual IQ data flows, IQ1, IQ2 IQ3, in the IF unit 220, which IQ data flows are converted to IF signals in the IF unit 220 and then transmitted to Active Antenna Elements, AAEs. The IF unit further comprises a distribution unit for distributing the IQ data flows to antenna sites, AAE1 231, AAE2 232, AAE3 233, AAE4 234. In the antenna sites 231-234 the IF signals are converted to RF signals. An RF signal is communicated wirelessly between one or more antenna of an antenna site from/to user equipments 150, e.g. mobile stations, that are situated in any of cells 131, 132, 133, 134 to which the antenna sites provides coverage, see fig. 2. The BBU 210 is further connected to a core network 140 for communication with other parts of the wireless communication network or to other communication networks, wireless or wire line communication networks.

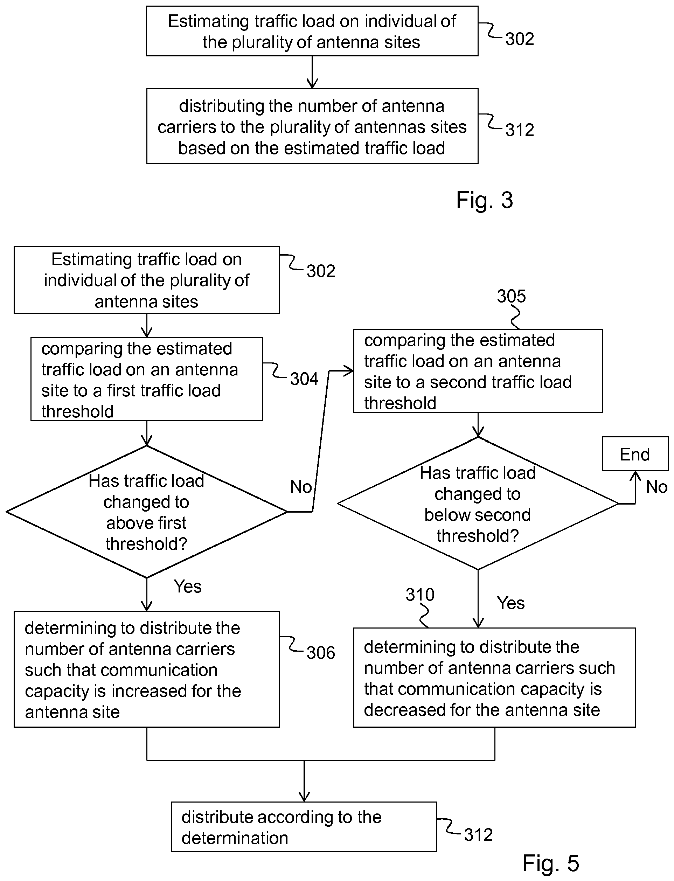

Fig. 3 describes a method performed by a base station 200 in a wireless communication system for controlling communication resources to a plurality of antenna sites 231, 232, 233, 234 of the base station. The base station provides communication resources as a number of antenna carriers providing IQ data flows IQ1, IQ2, IQ3 to the plurality of antenna sites. The method comprises estimating 302 traffic load on individual of the plurality of antenna sites 231, 232, 233, 234. The method further comprises distributing 312 the number of antenna carriers to the plurality of antenna sites based on the estimated traffic load on the individual of the plurality of antenna sites.

Thereby, the antenna carriers may be flexibly and/or dynamically distributed between the antenna sites depending on the current traffic load on the antenna sites. For example, the antenna carriers may be concentrated at current hot spots, i.e. in an area covered by an antenna site where there is high traffic load for the moment. As a result, the antenna carriers will be utilized efficiently, and, consequently, cost-effective, between the antenna sites connected to the base station.

An antenna carrier is a communication resource distributed by the baseband unit to the antenna site. The antenna carrier is a carrier frequency band or carrier over which an IQ data flow may be sent from the baseband unit of the base station to an antenna site of the base station (downlink, DL) or from the antenna site to the baseband unit (uplink, UL). An IQ data flow reflects the data transmitted between the baseband unit and an antenna site. An IQ data flow may be the actual data flow flowing towards the antenna sites when in use. A communication resource, i.e. an antenna carrier, may be a resource which may be distributed differently to the antenna sites depending on the traffic load. The antenna carrier comprises an IQ data flow or data stream when in use. An antenna carrier may be a carrier frequency band, such as 20 MHz. One antenna carrier may be distributed to one or more antenna sites, or two or more antenna carriers may be distributed to the same antenna site.

The steps of estimating traffic load and distributing the number of antenna carriers may mean dynamically estimating current traffic load and dynamically distributing the number of antenna carriers based on the dynamically estimated current traffic load. I.e. the steps of estimating and distributing may be performed repeatedly, during operation of the network, such that distribution of antenna carriers is changed if the traffic load is changed in the network.

Distributing the number of antenna carriers to the plurality of antenna sites based on the estimated traffic load on individual of the plurality of antenna sites may mean mapping an antenna carrier to one or more of the antenna sites based on the estimated current traffic load of the antenna sites. Also, it may be possible that two or more antenna carriers are mapped to one antenna site. Traffic load may mean amount of information going through the antenna site, UL or DL.

An antenna site comprises one or more antennas. One antenna site may provide coverage to one cell, or in the case of cell sectors, to one cell sector. The antenna site may comprise one antenna (or antenna element) or multiple antennas (or antenna elements), the latter for e.g. supporting Multiple Input Multiple Output, MIMO, communication. An antenna site may also be called an Active Antenna Element, AAE.

According to an embodiment, as shown in figure 1, the base station 200 further comprises a baseband unit 210 arranged to provide the number of antenna carriers to the plurality of antenna sites, and an IF unit 220. The IF unit is connected to the baseband unit 210 and to the plurality of antenna sites 231, 232, 233, 234.

According to another embodiment, the traffic load on individual of the plurality of antenna sites 231, 232, 233, 234 is estimated 302 based on received uplink power for the individual of the plurality of antenna sites. The received uplink power is the signal power of signals received over the air interface from UEs communicating with the antenna site. The received uplink power may be averaged over time to get a better traffic load indicator. The received uplink power may be an indication of the uplink traffic load, but also on the downlink traffic load. Such a method may be a good, rather quick and resource efficient way to estimate the traffic load, although it may be a rather coarse estimation.

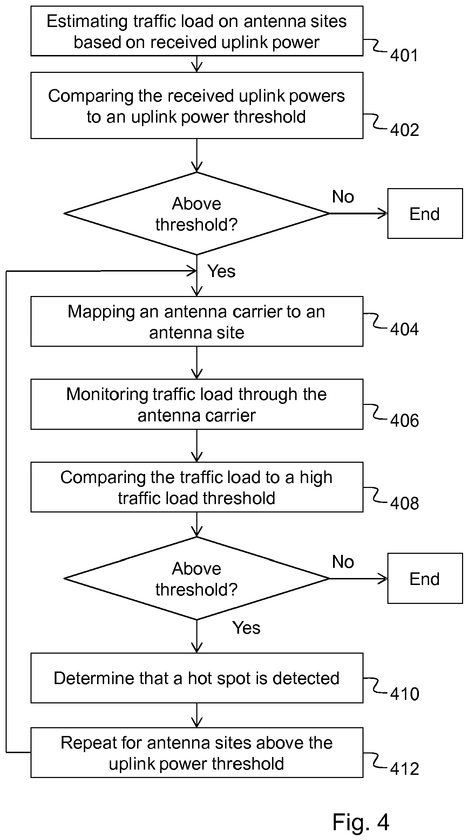

Figure 4 shows another embodiment of a method performed by an apparatus of a base station for controlling communication resources to a plurality of antenna sites of the base station. The embodiment comprises comparing 402 the received uplink power for individual of the plurality of antenna sites to an uplink power threshold. For the antenna sites for which the received uplink power is above the uplink power threshold, the method further comprises estimating the traffic load by mapping 404 an antenna carrier to at least some of the plurality of antenna sites, one antenna site at a time, and monitoring 406 the traffic load through the mapped antenna carrier, and further comparing 408 the estimated traffic load on the antenna sites to a high traffic load threshold to determine 410 high traffic load antenna sites.

The antenna carrier that is used for estimating the traffic loads on the antenna sites that had an uplink power above the uplink power threshold in steps 404-406 is mapped to one antenna site at a time, e.g. sequentially mapped. This antenna carrier may be called a measuring antenna carrier. This may be realized by the measuring antenna carrier first being mapped to a first antenna site and the traffic load through the measuring antenna carrier, i.e. through the first antenna site being monitored. Thereafter, the measuring antenna carrier is mapped to a second antenna site and the traffic load through the second antenna site is monitored, etc. Further, more than one antenna carrier may be used as a measuring carrier for one estimation procedure. In that case the measuring carriers are mapped to the plurality of antenna sites to be measured one at a time such that they together cover the antenna sites to be measured.

By only performing this measuring antenna carrier switching and monitoring technique on a limited number of antennas sites, which uplink powers are above an uplink power threshold, the antenna carriers are well utilized during an estimation period and the high traffic loads are found anyhow. The high traffic load antenna sites may also be called hotspot antenna sites, i.e. antenna sites covering a current hotspot area. After high load antenna sites have been determined, the number of antenna carriers may be distributed such that a higher amount of communication resources are made available at the high load antenna sites than at the antenna sites not being high load antenna sites.

Fig. 4 further shows estimating 401 traffic load on individual antenna sites based on a measured received uplink power, which step in the embodiment of fig. 4 is performed before the step 402 of comparing. Further, fig. 4 shows that the steps 404-410 may be repeated 412 for antenna sites above the uplink power threshold.

According to another embodiment, the traffic load on individual of the plurality of antenna sites 231, 232, 233, 234 is estimated 302 by mapping an antenna carrier to at least some of the plurality of antenna sites, one antenna site at a time, and monitoring the traffic load through the antenna carrier from the at least some of the plurality of antenna sites.

The antenna carrier that is used for estimating the traffic loads on the antenna sites that had an uplink power above the uplink power threshold in steps 404-406 is mapped to one antenna site at a time, e.g. sequentially mapped. This antenna carrier may be called a measuring antenna carrier. This may be realized by the measuring antenna carrier first being mapped to a first antenna site and the traffic load through the measuring antenna carrier, i.e. through the first antenna site being monitored. Thereafter, the measuring antenna carrier is mapped to a second antenna site and the traffic load through the second antenna site is monitored, etc. Further, more than one antenna carrier may be used as a measuring carrier for one estimation procedure. In that case the measuring carriers are mapped to the plurality of antenna sites to be measured one at a time such that they together cover the antenna sites to be measured.

The actual traffic load through an antenna carrier is then monitored or measured, which gives a rather exact measure on the traffic load at each antenna site. However, an antenna carrier used for such a measurement is then occupied with measurements for one antenna site, regardless of the load on that antenna site. If the antenna carrier would not have been occupied by measurements, the antenna carrier could have been used for providing coverage to for example other cells of other antenna sites in more need of coverage. Consequently, a good estimation may be achieved at the expense of network performance during the estimation period.

Figure 5 shows another embodiment of a method performed by a base station for controlling communication resources to a plurality of antenna sites of the base station. This embodiment comprises estimating 302 traffic load on individual of the plurality of antenna sites 231, 232, 233, 234. The embodiment may further comprise comparing 304 the estimated traffic load on a first antenna site of the plurality of antenna sites to a first traffic load threshold and determining 306 to distribute the number of antenna carriers to the plurality of antenna sites such that communication capacity is increased at the first antenna site, when the comparison shows that the estimated traffic load on the first antenna site has changed to above the first traffic load threshold. With such an embodiment it is possible and rather easy to detect that the load of an individual antenna site has increased above a threshold in which an increase in communication resources would be necessary for keeping a good communication service to the mobile terminals connected to the antenna site. Such an embodiment is especially advantageous in small networks with a handful of different antenna sites. In larger networks, other embodiments described in this document may be more useful.

The embodiment described in fig. 5 may further comprise comparing 305 the estimated traffic load on a first antenna site of the plurality of antenna sites to a second traffic load threshold and determining 310 to distribute the number of antenna carriers to the plurality of antenna sites such that communication capacity is decreased at the first antenna site when the comparison shows that the estimated traffic load on the first antenna site has changed to below the second traffic load threshold. With such an embodiment it is possible and rather easy to detect that the load of an individual antenna site has decreased below a threshold in which a decrease in communication resources would be necessary for keeping a good communication service to the mobile terminals connected to the antenna site. Such an embodiment is especially advantageous in small networks with a handful of different antenna sites. In larger networks, other embodiments described in this document may be more useful.

The first threshold may be a hotspot threshold or a high-traffic threshold. Similarly, the second threshold may be a non-hotspot threshold or a low-traffic threshold. For example, the first threshold may be a hotspot threshold and the second threshold may also be a non-hotspot threshold. If the load increases to above the hotspot threshold, the antenna site is determined to be covering a hotspot and communication capacity is increased. If the load decreases to below the non-hotspot threshold, the antenna site is determined to be not be covering a hotspot anymore and communication capacity is decreased. Also, there may be a hysteresis for determining hotspots which means that the first threshold is on a higher level than the second threshold even if they are used for determining hotspots. If no hysteresis is used the first and the second threshold would be on the same level.

Further, it may possible to interpret this embodiment and the previous embodiment such that the traffic load are first estimated on the individual antennas, and then after estimating the traffic load of individual antennas, estimate the high traffic area and low traffic area and then distribute more antenna carriers to high traffic area and fewer antenna carriers to low traffic area.

The steps of comparing and determining may mean dynamically comparing and determining, in other words, repeatedly comparing and determining to detect that the estimated traffic load has changed to above or below the first or the second traffic load threshold. The embodiment of fig. 5 further shows the step of distributing 312 the number of antenna carriers to the antennas sites according to the determination.

According to another embodiment, traffic load on a first antenna site of the plurality of antenna sites is estimated 302 by receiving a signal from the first antenna site of the plurality of antenna sites, which signal has been appended an identification which identification indicates that the signal is received from the first antenna site, and determining that the signal originates from the first antenna site based on the identification, and, during a measurement period, determining the traffic load on the first antenna site based on the determination that the signal originates from the first antenna. During a measurement period, the signal or the number of signals that is received from the first antenna site can be analyzed based on the appended identification. This analysis can be used to estimate the traffic load. Performing this method for the individual antenna sites provides a good estimation for traffic load at the individual antenna sites which is a good help when determining the distribution of the antenna carriers to the individual antenna sites.

According to an embodiment, the method is performed by the baseband unit 210. Alternatively, the method may be performed by the IF unit 220.

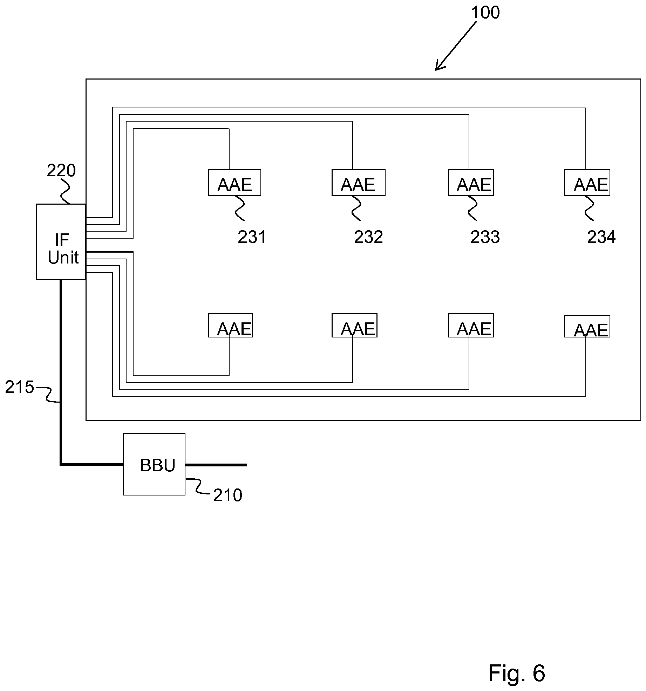

In figure 6, a basic structure of a base station 200 according to an embodiment is shown. The base station comprises a BBU 210, an IF unit 220 and a number of antenna sites 231-234. At each antenna site, an active antenna element, AAE, is installed. The IF unit 220 may also be called an IF Hub. The BBU 210 is connected to the IF hub 220 via e.g. an optical fiber. The individual AAEs are each connected with a dedicated cable back to the IF hub (IFH). In an uplink direction, the AAE performs a conversion between high frequency RF signals and (low frequency) IF signals to reduce the cable loss. The IFH 220 bridges the AAEs and the BBU 210. The IFH first performs a conversion between the IF signals from the AAEs and the IQ data flows. Then it aggregates the IQ data flows to baseband signals, i.e. CPRI signals. The CPRI signals are transported between the IFH and the BBU. The IFH may also incorporate a switching functionality supporting any to any switching between the IF signals of the AAEs and the IQ data flows which will be processed in the BBU. In this way, the base station can form different antenna topologies with different switching states in the IFH with respect to the baseband resources. The baseband resources, i.e. antenna carriers correspond to the processing capacity for processing IQ data flows. The baseband resources are centralized in the BBU and are pooled to the AAEs in the covered area. The baseband resources can be flexibly moved to any sets of the AAEs according to the traffic load in the corresponding covered local areas.

More resources may be assigned to the high load local areas, while fewer resources may be assigned to low load local areas. Inside a building, traffic is unlikely evenly distributed. Traffic may concentrate in certain local areas (i.e. hotspots) like conference rooms, cafeterias, lobby area etc., and traffic hotspots may move from time to time, as people are moving around, e.g. for meetings. Given the fixed baseband capacity of the BBU, dynamically changing the antenna topology based on the local load is beneficial to increase the capacity in local hotspots and to increase the user experiences. This also benefits the operator by pooling the baseband resources in a centralized BBU. The BBU capacity can be gradually upgraded on demand. This can also benefit in energy consumption. For example, it is possible to switch to a tree-topology (a common communication line branching off into individual communication lines to the individual AAEs) to save energy consumption in the IFH and the BBU when the network load is low, e.g. during night. In this case, some overlapped AAEs can be even turned into an idle mode while some other active AAEs may increase their coverage by increasing output power.

According to some embodiments, at least some of the embodiments described in this disclosure may be integrated in the BBU and/or coordinated by the BBU. The BBU may perform one or more of the following: monitor the traffic load, determine the need for the resource reconfiguration, collect the traffic related information from the AAEs to roughly estimate the hotspot locations, instruct the reconfiguration to zoom in to the rough estimated hotspot areas to finely estimate the hotspot locations, and finally instruct resource reconfiguration and apply proper radio techniques to increase capacity.

This disclosure may cover any main-remote setup with a hub unit between the AAEs and the BBU. I.e. the IFH is an example of a hub unit. Other examples of a main-remote implementation is that the AAEs are front hauled by CPRI. The hub unit or units may then act as a CPRI mapper. However, the IF-based implementation as describe above may be seen as the most cost effective solution.

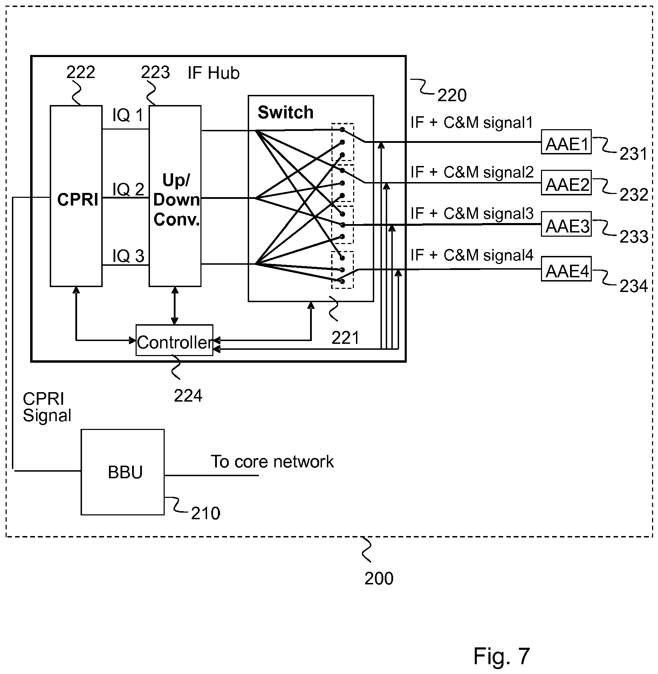

The following focuses on the IF-based implementation. A possible base station system structure 200 for an IF-based implementation is illustrated by an example with 4 AAEs 231-234 and 3 IQ data flows IQ1-IQ3 in fig. 7. The IFH 220 comprises a switch 221 or switching functionality. Basically, the switch maps between the IF signals from/to the AAEs and the IQ data flows, which corresponds to the baseband resources in the BBU. In this example illustrated in fig. 7, the IF signals from/to AAE 1-2 are switched to IQ data flow 1. In DL, the IQ data flow 1 is broadcasted to AAE 1-2. In UL, the IF signals from AAE 1-2 are added first and then forwarded to IQ data flow 1. So the baseband resource for IQ data flow 1 in the BBU is shared among AAE 1-2. The IF signal from/to AAE 3 is switched to IQ data flow 2 and IF the signal from/to AAE 4 is switched to IQ data flow 3. In UL, a CPRI block 222 aggregates the IQ data flows to the CPRI signal sent. In DL, the CPRI block 222 divides the aggregated IQ data flow into the three separate IQ data flows IQ1-IQ3. One CPRI signal can carry multiple IQ data flows. For simplification in illustration, one antenna per AAE is assumed here. The IFH 220 further comprises an Up/down converter 223 for, in UL, down-converting the switched IQ data flows from IF to baseband and for, in DL, up-converting the IQ data flows from baseband to IF.

In the BBU 210, different radio schemes can be used to increase capacity according to the AAE locations. In the case where AAE 3-4 are closely located within one hotspot, MU-MIMO may be used to increase the capacity by joint processing of the IQ data flow 2 and 3. In the case where AAE 3-4 are located in two adjacent hotspots, CoMP may be used to increase the capacity also by joint processing. If they are separated in space, the capacity gain is from spatial reuse without the need for interference mitigation schemes. In the IFH 220 of fig. 7, a controller 224 for handling control and management, C&M, channels between the IFH and the AAEs is also shown. The C&M channels are used to communicate between the IFH and the AAEs for controlling and managing the AAEs. Between the IFH and the BBU, the built-in C&M channel in CPRI may be used. Thereby, the BBU can control and manage the IFH and also all the way to the AAEs, if desirable. For example, the BBU can get the operational information from IFH and AAE, and/or control the switch state in IFH and'/or manage the IF configuration of IFH, and/or the IF and RF configurations of AAEs.

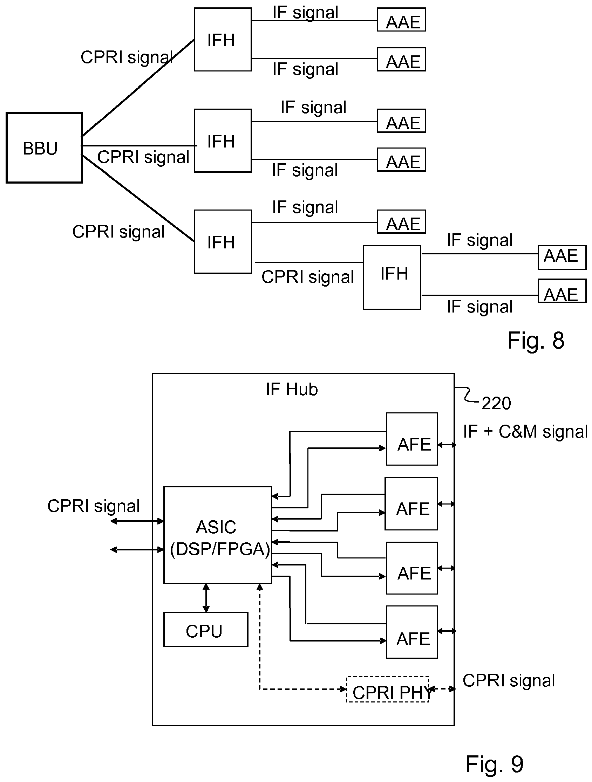

For a large deployment, multiple IFHs are needed. Fig. 8 illustrates a possible base station system topology with multiple IFHs where multiple AAEs are driven from individual IFHs. Multiple IFHs are connected to the BBU. The IFHs can be cascaded as a daisy chain. For a daisy chain setup, CPRI signals are aggregated or multiplexed on the upper network level IFH.

Fig. 9 shows a possible digital implementation of the IFH 220 according to an embodiment. The IFH may comprise an Application Specific Integrated Circuit, ASIC, block having a signal switching functionality as the switch of fig. 7, an IF/IQ/CPRI conversion functionality and a CPRI multiplexing/demultiplexing functionality. A CPU block controlling the ASIC may communicate with the BBU via the built-in C&M channel in CPRI and with the AAEs via the C&M channel between IFH and AAEs. The CPU block reports back to the BBU operational information of the IFH and the AAEs. It also configures the IFH, with e.g. IF frequencies, gain settings etc., according to instructions from the BBU. The CPU may also forward the C&M signaling from the BBU to the AAEs. The IFH further comprises an analog front end, AFE, functionality. The AFE may comprise hybrid line drivers, amplifiers, DAC, ADC, filters etc.

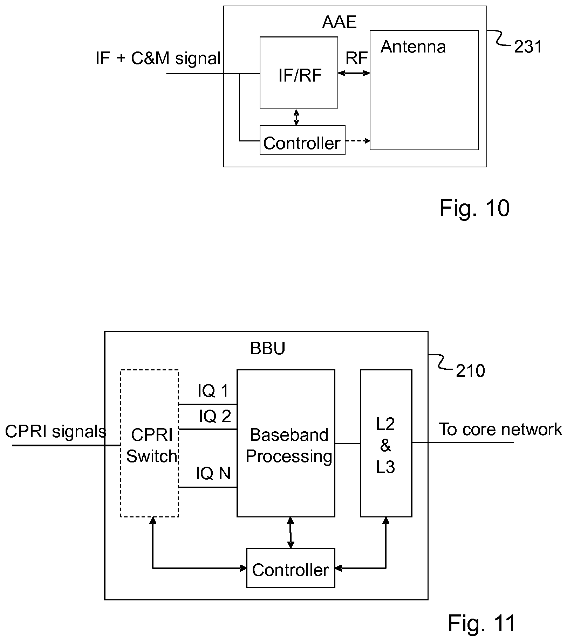

Fig. 10 shows a possible block diagram of an AAE 231 according to an embodiment. Basically, the AAE comprises an IF/RF conversion block, a controller block and an antenna block. The controller block is arranged to receive instructions from the IFH, and also from the BBU forwarded by the IFH. The controller block is further arranged to configure the IF/RF conversion block, e.g. the settings of the IF and RF frequencies, the gain settings, and to turn on/off the IF/RF block. If the antenna or antennas in the antenna block are tunable or configurable, e.g. switchable antenna patterns, antenna matching etc., the controller may also control the antenna block. The controller is also arranged to retrieve parameters of the AAE and to report the parameters back to the IFH and the BBU.

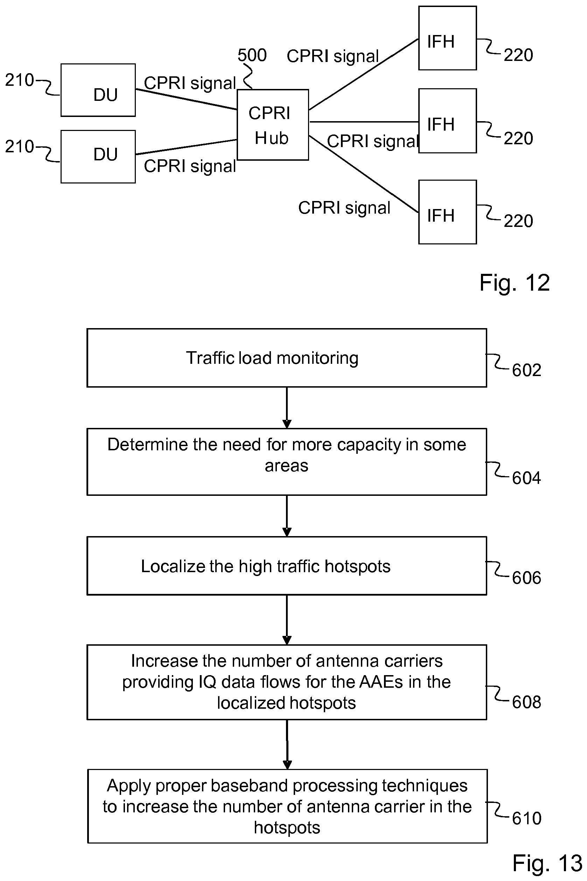

Fig. 11 shows the block diagram of a BBU 210 according to an embodiment. The BBU 210 comprises an optional CPRI switch block, a baseband processing block, a Layer2 and Layer3 block, L2 and L3 block, and a controller block. The CPRI switch block is used when the amount of IQ data flows in the CPRI signal is more than the amount of the baseband processing capacity. The CPRI switch block is capable of combining any multiple IQ data flows to one IQ data flow, like the switching functionality in the IFH but in the CPRI domain. It may be useful to pool the BBU resources, or baseband resources, between multiple IFHs, as shown in the multi-IFH scenario of fig. 8. For example, when different IFHs are used in different floors, the signals of the IFHs from the low traffic floors can be combined. This would free up more BBU resources for other high traffic floors. When multiple BBUs are used, the CPRI switching functionality of the CPRI switch block can be implemented outside of the BBU as a CPRI hub 500, as illustrated in fig. 12. The baseband processing block is arranged to act as a processing pool to process the UL IQ data flows and the DL IQ data flows applying different processing techniques, e.g. CoMP, MU-MIMO etc. The L2 and L3 block is arranged to perform the layer 2 and layer 3 functionalities for the UL and DL data and signaling. The controller block is arranged to control and manage the IFHs and the AAEs. Regarding the feature of flexible cell, it is arranged to gather the information from the IFHs and the AAEs, to determine the configuration regarding switch states and baseband pool, and/or to control the IFH hub and the CPRI switch to dynamically change the switching states. Alternatively, this functionality may be placed in a centralized control node outside the BBU in other parts of the network, e.g. the core network. The controller may also help the baseband processing block to determine what kind of processing techniques, e.g. CoMP or MU-MIMO, to use for different signals.

A feature of this invention is the capability to dynamically move available baseband resources, i.e. antenna carriers providing IQ data flows, around in the geographical area covered by a plurality of AAEs. The more front haul and baseband resources are applied in one area, the more capacity is moved to the area. Therefore, by moving more capacity, i.e. antenna carriers, to high traffic hotspots, one can increase the number of IQ data flows for the AAEs within the hotspots and assign the corresponding baseband resources/antenna carriers to process the signals. In low traffic load areas, one can reduce the number of IQ data flows for the AAE to collect the resources back to the pool and make more capacity available in the pool for the potential hotspots later on. As shown, the front haul reconfiguration of antenna carrier assignment is done by changing the switching states in IFH and/or BBU (or CPRI hub if a CPRI hub exists, see fig. 12), which assignment is coordinated by the BBU.

Fig. 13 shows an embodiment of a method for increasing the capacity of traffic hotspots. For a given front haul configuration of IQ data flow assignment and the corresponding baseband resource assignment, the BBU monitors 602 traffic load in the covered area. It determines 604 the need for more capacity for an area when for example the monitored traffic load in the area is higher than a threshold. Then, a procedure for localizing 606 hotspots is executed and thus the hotspot areas are determined, based on the monitored traffic load. The BBU then instructs the IFH and/or the CPRI switch inside the BBU (or the CPRI hub outside the BBU if there is a CPRI hub) to change the switching states such that the number of antenna carriers providing IQ data flows to the AAEs is increased 608 in the hotspots. The number of antenna carriers of the hotspots is increased; when the BBU applies 610 proper processing techniques to process the more IQ data flows. In the exemplified case in fig. 7, the area covered by AAE 3-4 is determined as the hotspot area. AAE 3-4 are fully front hauled as one IQ stream per antenna to increase the capacity. Meanwhile, the area covered by AAE 1-2 is determined as low traffic area. Only one IQ stream is used to front haul the combined signal of AAE 1-2. In this case, the capacity of the area covered by AAE 1-2 is only half of that of the area covered by AAE 3-4. The above assumes 1 antenna per AAE. When 2 antennas are used per AAE, the capacity of AAE 1-2 can be only one quarter of the capacity of AAE 3-4.

To be able to move more capacity to hotspots, the hotspots need to be localized. For a fully resourced system, every AAE is front hauled and the BBU can process the signals from all AAEs. In this case, the BBU can directly monitor the traffic load of each AAE and therefore can determine from which AAE the traffic originates and thereby from which geographical area the traffic originates. However, it is not straightforward for a pooled system where the amount of baseband resources, i.e. antenna carriers, is less than the number of AAEs. One way is to switch antenna carriers through all AAEs in the area. After each switch, the antenna carriers are applied to the AAEs which have not been monitored yet. Then, the BBU monitors the traffic load of the AAEs which are front hauled by the switching. The process continues until all AAEs have been monitored. The monitored traffic information can then determine from where traffic originates. Preferably, only spare resources, i.e. one or a small number of antenna carriers are used for switching, because other resources are used to keep the coverage provided by the base station system. If the pooling factor (the ratio between the amount of AAEs and the amount of the available antenna carriers) is not so large, this process can be fast. For example, if each AAE has 2 antennas and the pooling factor is 2, the system can switch to a state in which only one IQ stream of one AAE is front hauled. After one switching, all AAEs can be monitored simultaneously and thereby traffic is localized quickly. The whole process only takes one switch.

If the pooling factor is large, the switching process could take long time. The switching time can be reduced, if the searching range is reduced by searching only a subset of the AAEs. If an AAE is active, it can possibly monitor some traffic related indicators. These traffic related indicators from AAEs can be used as a rough means to estimate the hotspot locations. One such indicator is the received signal power of the AAEs, which may be averaged over time or in a form of other statistical values. The received signal power of each AAE corresponds to the uplink received power. The uplink received power is an indicator of the uplink traffic load per AAE. The received signal power is higher if the uplink traffic load is higher. It is also an indicator for downlink traffic load. Even if there is only downlink traffic, the uplink would be active, for communicating signaling, i.e. control messages transmitted on the common channels, e.g. for downstream scheduling and rate adaptation purposes, continuously sent from the active UEs to the AAEs in question. So the uplink received power can be used as a general traffic indicator for both downlink and uplink. So with the uplink received power, preferably statistical values of the uplink received power, and the location information per AAE, it is able to roughly determine the area where there are lots of active users.

At the AAE, the received signal power can be measured either on the RF signal before RF/IF conversion or on the IF signal after RF/IF conversion. It is preferable to do it in the IF frequency so that it can support multiple RF bands down-converted to the fixed IF band. Another possible location for measuring the uplink received power is at the receiver of the IFH, i.e. at the part of the IFH receiving signals from the AAEs, e.g. the AFE of fig. 9. In this case, the power figures need to be calibrated to compensate for different cable loss and different gain settings along the path from the AAE to the IFH.

Another alternative for traffic monitoring is to put a "watermark" on the signal from an AAE so that the BBU can determine from which AAE the signal originates. This may be implemented by modulating the signal sent from the AAE to the IF. For instance, slight variations of the receiver local oscillator signal, RX LO, according to a predetermined pattern could introduce a Doppler-shift on the received signal. This pattern can then be recognized by the BBU and used by the BBU to detect from which AAE the signal originates. Similar "watermarking" schemes could be implemented using slight variations of the RX amplitude and/or the phase and/or frequency.

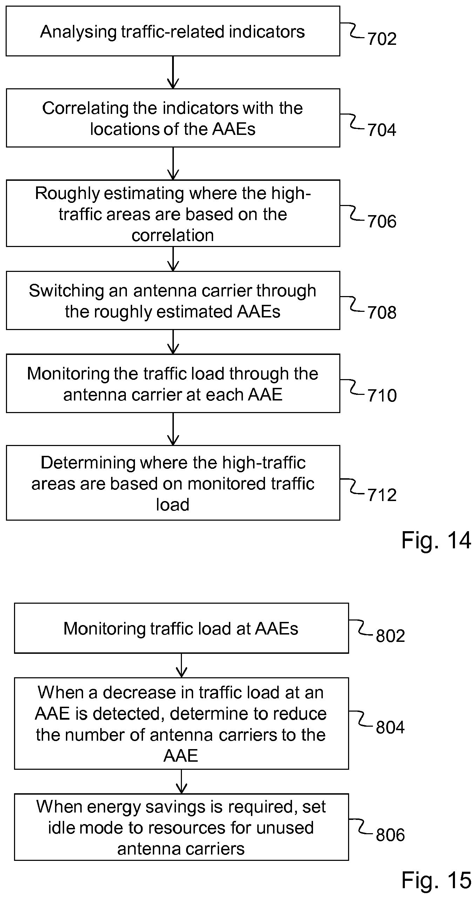

Fig. 14 shows a basic procedure for localizing hotspots. The procedure may be performed in the BBU or alternatively in the IFH. In the following it is assumed that the procedure is performed in the BBU. The BBU first analyses 702 traffic indicators received from AAEs via IFHs or directly from IFHs. The traffic-related indicators may be received signal power level per AAE, as a statistical value over time. The traffic-related indicators may be sent to the BBU from the AAEs/IFHs on request from the BBU. The BBU then correlates 704 the indicators with the locations of the AAEs. Then the BBU roughly estimates 706 where the high-traffic areas, i.e. hotspots are, based on the correlation, to reduce the searching range. The BBU may also roughly estimate where the low-traffic areas are in the same way, e.g. depending on the value of the received signal power level of each AAE. For example, from the correlation, edges between low-traffic areas and high-traffic areas may be determined. Then the front haul switching and monitoring approach may be used in the roughly estimated hotspots to finely determine the hotspots. This may be performed by switching 708 an antenna carrier through the AAEs roughly estimated to be serving high-traffic areas, and monitoring 710 the traffic load through the antenna carrier at each of these roughly determined AAEs, i.e. when the antenna carrier is connected to the AAE. This may be performed by using spare resources in the pool of antenna carriers. From the monitored traffic load it is determined 712 where the high-traffic areas are.

A hotspot area becomes a low traffic area when users (of UEs) leave the hotspot area. Then the configuration in the front haul and baseband resources over-provides communication capacity to the area. It is then a need to reduce the front haul and baseband resources in this area and collect the resources back to the pool for later use. This would also be beneficial for energy efficiency. The hardware and software related to the spare front haul and baseband resources can be set to idle modes to save energy. For dense deployments, the overlapped AAEs can also be set to idle mode to further save energy. Fig 15 shows a procedure according to an embodiment for adapting communication resources in a base station system to low traffic scenarios. The procedure may be performed by the BBU. The procedure starts by monitoring 802 traffic load at AAEs. When a decrease in traffic load at an AAE is detected, determine 804 to reduce the number of antenna carriers to the AAE. The number of antenna carriers may be reduced by collecting the resources back to a pool of resources kept in control by the BBU. It may be determined to reduce the number of antenna carriers to the AAE when the traffic load at the AAE has decreased to below a threshold. The threshold may be predetermined. When energy savings is required at the base station system, set 806 idle mode to resources, such as hardware and software, related to unused antenna carriers. Also, for AAEs with overlapping coverage areas, one or some of the AAEs may be set in idle mode when energy saving is required

According to another embodiment, it may be possible to distribute the antenna carriers differently in uplink than in downlink.

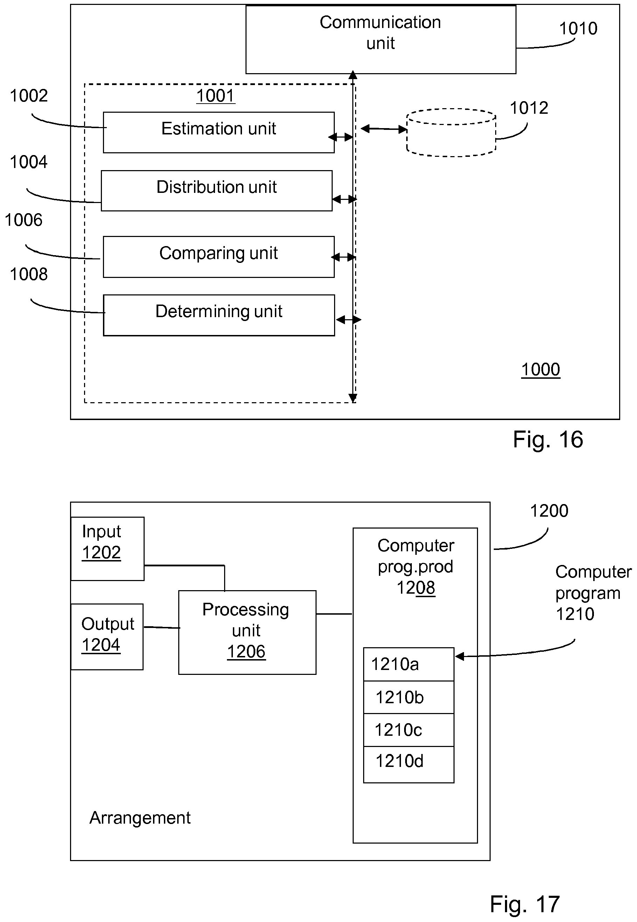

According to an embodiment described in figure 16, an apparatus 1000 in a base station 200 in a wireless communication system is described. The apparatus 1000 is configured for controlling communication resources to a plurality of antenna sites 231, 232, 233, 234 of the base station. The base station has a baseband unit configured for providing communication resources as a number of antenna carriers providing IQ data flows IQ1, IQ2, IQ3 to the plurality of antenna sites. The apparatus comprises an estimation unit 1002 for estimating traffic load on individual of the plurality of antenna sites 231, 232, 233, 234, and a distribution unit 1004 for distributing the number of antenna carriers to the plurality of antenna sites based on the estimated traffic load on individual of the plurality of antenna sites.

The apparatus 1000 may further comprise a communication unit 1010, which may be considered to comprise conventional means for communication from and/or to other nodes of the network. The apparatus 1000 may further comprise one or more storage units or memories 1012.

According to another embodiment, the estimation unit 1002 is arranged to estimate the traffic load on individual of the plurality of antenna sites 231, 232, 233, 234 based on received uplink power for the individual of the plurality of antenna sites.

According to another embodiment, the apparatus further comprises a comparing unit 1006 for comparing the received uplink power for individual of the plurality of antenna sites to an uplink power threshold. For the antenna sites for which the received uplink power is above the uplink power threshold, the estimation unit 1002 is further arranged for estimating the traffic load by mapping an antenna carrier to at least some of the plurality of antenna sites, one antenna site at a time, and monitoring the traffic load through the antenna carrier, and the comparing unit 1006 is further arranged for comparing the estimated traffic load on the antenna sites to a high traffic load threshold to determine high traffic load antenna sites.

According to yet another embodiment, the estimation unit 1002 is arranged for estimating the traffic load on individual of the plurality of antenna sites 231, 232, 233, 234 by mapping an antenna carrier to at least some of the plurality of antenna sites, one antenna site at a time, and monitoring the traffic load through the antenna carrier from the at least some of the plurality of antenna sites.

According to yet another embodiment, the apparatus further comprises: a comparing unit 1006 for comparing the estimated traffic load on a first antenna site of the plurality of antenna sites to a first traffic load threshold, and a determining unit 1008 for determining to distribute the number of antenna carriers to the plurality of antenna sites such that communication capacity is increased at the first antenna site if the comparison shows that the estimated traffic load on the first antenna site has changed to above the first traffic load threshold.

According to yet another embodiment, the apparatus further comprises a comparing unit 1006 for comparing the estimated traffic load on a first antenna site of the plurality of antenna sites to a second traffic load threshold, and a determining unit 1008 for determining to distribute the number of antenna carriers to the plurality of antenna sites such that communication capacity is decreased at the first antenna site when the comparison shows that the estimated traffic load on the first antenna site has changed to below the second traffic load threshold.

According to yet another embodiment, the estimation unit 1002 is further arranged to estimate traffic load on a first antenna site of the plurality of antenna sites by receiving a signal from the first antenna site of the plurality of antenna sites, which signal has been appended an identification indicating that the signal is received from the first antenna site, and determining that the signal originates from the first antenna site based on the identification, and, during a measurement period, determining the traffic load on the first antenna site based on the determination that the signal originates from the first antenna site.

According to another embodiment, the apparatus 1000 is arranged in the baseband unit 210. As described, the base station further comprises an intermediate frequency unit, IF unit, 220. The apparatus with its units may be arranged either in the IF unit 220 or in the BBU 210, or the units of the apparatus 1000 may be distributed between the IF unit 220 and the BBU 210. Alternatively, the apparatus may be arranged in a separate control unit outside the BBU and the IF unit.

The estimation unit 1002, the distribution unit 1004, the comparing unit 1006 and the determining unit 1008 may be arranged in an arrangement 1001. The arrangement 1001 could be implemented e.g. by one or more of: a processor or a micro processor and adequate software and storage therefore, a Programmable Logic Device, PLD, or other electronic component(s)/processing circuit(s) configured to perform the actions, or methods, mentioned above.

Figure 17 schematically shows an embodiment of an arrangement 1200 for use in an apparatus 1000, which also can be an alternative way of disclosing an embodiment of the arrangement 1001 in the apparatus 1000 illustrated in figure 16. Comprised in the arrangement 1200 is a processing unit 1206, e.g. with a Digital Signal Processor, DSP. The processing unit 1206 may be a single unit or a plurality of units to perform different actions of procedures described herein. The arrangement 1200 may also comprise an input unit 1202 for receiving signals from other entities, and an output unit 1204 for providing signal(s) to other entities. The input unit 1202 and the output unit 1204 may be arranged as an integrated entity.

Furthermore, the arrangement 1200 comprises at least one computer program product 1208 in the form of a non-volatile or volatile memory, e.g. an Electrically Erasable Programmable Read-only Memory (EEPROM), a flash memory, a disk drive or a Random-access memory (RAM). The computer program product 1208 comprises a computer program 1210, which comprises code means, which when executed in the processing unit 1206 in the arrangement 1200 causes the arrangement 1001 and/or the apparatus 1000 to perform the actions of any of the procedures described earlier in conjunction with figures 3-5.

The computer program 1210 may be configured as a computer program code structured in computer program modules. Hence, in an exemplifying embodiment, the code means in the computer program 1210 of the arrangement 1200 comprises an estimation module 1210a for estimating traffic load on individual of the plurality of antenna sites 231, 232, 233, 234, and a distribution module for distributing the number of antenna carriers to the plurality of antenna sites based on the estimated traffic load on individual of the plurality of antenna sites.

The acts which have above been described as being implemented or executed by a processor may be performed by any suitable machine. The machine may take the form of electronic circuitry in the form of a computer implementation platform or a hardware circuit platform. A computer implementation of the machine platform may be realized by or implemented as one or more computer processors or controllers as those terms are herein expansively defined, and which may execute instructions stored on non-transient computer-readable storage media. In such a computer implementation the machine platform may comprise, in addition to a processor(s), a memory section, which in turn can comprise random access memory; read only memory; an application memory, a non-transitory computer readable medium which stores, e.g., coded non instructions which can be executed by the processor to perform acts described herein; and any other memory such as cache memory, for example. Another example platform suitable is that of a hardware circuit, e.g., an application specific integrated circuit, ASIC, wherein circuit elements are structured and operated to perform the various acts described herein.

One or more of the embodiments described above have one or more of the following advantages: Provides a cost-effective flexible cell solution providing high capacity for hotspots. Especially advantageous in an indoor system. Baseband resources can be pooled. Capacity in a base station system may be moved dynamically between AAEs, depending on current traffic load on the AAEs. Makes it possible to save energy by setting baseband resources in idle mode.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for an apparatus or method to address each and every problem sought to be solved by the presently described concept, for it to be encompassed hereby.

## Claims

1. A method performed by an apparatus in a base station (200) in a wireless communication system for controlling communication resources to a plurality of antenna sites (231, 232, 233, 234) of the base station, the base station providing communication resources as a number of antenna carriers providing IQ data flows (IQ1, IQ2, IQ3) to the plurality of antenna sites, the method comprising:
estimating (302) traffic load on individual of the plurality of antenna sites (231, 232, 233, 234),
distributing (312) the number of antenna carriers to the plurality of antenna sites based on the estimated traffic load on individual of the plurality of antenna sites, wherein the traffic load on individual of the plurality of antenna sites (231, 232, 233, 234) is estimated (302) by mapping an antenna carrier to at least some of the plurality of antenna sites, an antenna site at a time, and monitoring the traffic load through the antenna carrier from the mapped antenna site of the at least some of the plurality of antenna sites.

2. Method according to claim 1, wherein the base station (200) further comprises a baseband unit (210) arranged to provide the number of antenna carriers to the plurality of antenna sites and an intermediate frequency unit, IF unit, (220) and wherein the IF unit is connected to the baseband unit (210) and to the plurality of antenna sites (231, 232, 233, 234).

3. Method according to any of the preceding claims, wherein the traffic load on individual of the plurality of antenna sites (231, 232, 233, 234) is estimated (401) based on received uplink power for the individual of the plurality of antenna sites.

4. Method according to claim 3, further comprising:
comparing (402) the received uplink power for individual of the plurality of antenna sites to an uplink power threshold,
for the antenna sites for which the received uplink power is above the uplink power threshold, estimating the traffic load by mapping (404) an antenna carrier to at least some of the plurality of antenna sites, an antenna site at a time, and monitoring (406) the traffic load through the antenna carrier, and further comparing (408) the estimated traffic load on the antenna sites to a high traffic load threshold to determine (410) high traffic load antenna sites.

5. Method according to any of the preceding claims, further comprising:
comparing (304) the estimated traffic load on a first antenna site of the plurality of antenna sites to a first traffic load threshold,
determining (306) to distribute the number of antenna carriers to the plurality of antenna sites such that communication capacity is increased at the first antenna site if the comparison shows that the estimated traffic load on the first antenna site has changed to above the first traffic load threshold.

6. Method according to any of the preceding claims, further comprising:
comparing (305) the estimated traffic load on a first antenna site of the plurality of antenna sites to a second traffic load threshold,
determining (310) to distribute the number of antenna carriers to the plurality of antenna sites such that communication capacity is decreased at the first antenna site when the comparison shows that the estimated traffic load on the first antenna site has changed to below the second traffic load threshold.

7. Method according to any of the preceding claims, wherein a traffic load on a first antenna site of the plurality of antenna sites is estimated (302) by:
receiving a signal from the first antenna site of the plurality of antenna sites, which signal has been appended an identification indicating that the signal is received from the first antenna site, and
determining that the signal originates from the first antenna site based on the identification, and, during a measurement period,
determining the traffic load on the first antenna site based on the determination that the signal originates from the first antenna site.

8. Method according to any of the preceding claims, wherein the method is performed by the baseband unit (210).

9. An apparatus (1000) operable in a base station (200) in a wireless communication system, configured for controlling communication resources to a plurality of antenna sites (231, 232, 233, 234) of the base station, the base station having a baseband unit (210) configured for providing communication resources as a number of antenna carriers providing IQ data flows (IQ1, IQ2, IQ3) to the plurality of antenna sites, the apparatus comprising:
an estimation unit (1002) for estimating traffic load on individual of the plurality of antenna sites (231, 232, 233, 234),
a distribution unit (1004) for distributing the number of antenna carriers to the plurality of antenna sites based on the estimated traffic load on individual of the plurality of antenna sites,
wherein the estimation unit (1002) is arranged for estimating the traffic load on individual of the plurality of antenna sites (231, 232, 233, 234) by mapping an antenna carrier to at least some of the plurality of antenna sites, an antenna site at a time, and monitoring the traffic load through the antenna carrier from the mapped antenna site of the at least some of the plurality of antenna sites.

10. Apparatus according to claim 9, wherein the estimation unit (1002) is arranged to estimate the traffic load on individual of the plurality of antenna sites (231, 232, 233, 234) based on received uplink power for the individual of the plurality of antenna sites.

11. Apparatus according to claim 10, further comprising a comparing unit (1006) for comparing the received uplink power for individual of the plurality of antenna sites to an uplink power threshold, and, for the antenna sites for which the received uplink power is above the uplink power threshold, the estimation unit (1002) further being arranged for estimating the traffic load by mapping an antenna carrier to at least some of the plurality of antenna sites, an antenna site at a time, and monitoring the traffic load through the antenna carrier, and the comparing unit (1006) further being arranged for comparing the estimated traffic load on the antenna sites to a high traffic load threshold to determine high traffic load antenna sites.

12. Apparatus according to any of the claims 9-11, further comprising:
a comparing unit (1006) for comparing the estimated traffic load on a first antenna site of the plurality of antenna sites to a first traffic load threshold, and
a determining unit (1008) for determining to distribute the number of antenna carriers to the plurality of antenna sites such that communication capacity is increased at the first antenna site if the comparison shows that the estimated traffic load on the first antenna site has changed to above the first traffic load threshold.

13. Apparatus according to any of the claims 9-12, further comprising:
a comparing unit (1006) for comparing the estimated traffic load on a first antenna site of the plurality of antenna sites to a second traffic load threshold, and
a determining unit (1008) for determining to distribute the number of antenna carriers to the plurality of antenna sites such that communication capacity is decreased at the first antenna site when the comparison shows that the estimated traffic load on the first antenna site has changed to below the second traffic load threshold.

14. Apparatus according to any of the 9-13, wherein the estimation unit (1002) is further arranged to estimate traffic load on a first antenna site of the plurality of antenna sites by:
receiving a signal from the first antenna site of the plurality of antenna sites, which signal has been appended an identification indicating that the signal is received from the first antenna site, and
determining that the signal originates from the first antenna site based on the identification, and, during a measurement period,
determining the traffic load on the first antenna site based on the determination that the signal originates from the first antenna site.

15. Apparatus according to any of the claims 9-14, wherein the apparatus is arranged in the baseband unit (210).

16. A computer program (1210) comprising computer readable code means, which when run in an apparatus (1000) of a base station (200) comprising a plurality of antenna sites and a baseband unit providing communication resources as a number of antenna carriers providing IQ data flows to the plurality of antenna sites, causes the apparatus (1000) to perform the following steps:
estimating traffic load on individual of the plurality of antenna sites, and
distributing the number of antenna carriers to the plurality of antenna sites based on the estimated traffic load on individual of the plurality of antenna sites,
wherein the traffic load on individual of the plurality of antenna sites (231, 232, 233, 234) is estimated (302) by mapping an antenna carrier to at least some of the plurality of antenna sites, an antenna site at a time, and monitoring the traffic load through the antenna carrier from the mapped antenna site of the at least some of the plurality of antenna sites.

17. A computer program product (1208), comprising computer readable medium and a computer program (1210) according to claim 16 stored on the computer readable medium.

## Patentansprüche

1. Verfahren, das von einer Vorrichtung in einer Basisstation (200) in einem drahtlosen Kommunikationssystem zum Steuern von Kommunikationsressourcen zu mehreren Antennenstandorten (231, 232, 233, 234) der Basisstation durchgeführt wird, wobei die Basisstation Kommunikationsressourcen bereitstellt, wenn eine Anzahl von Antennenträgern, die IQ-Datenströme (IQ1, IQ2, IQ3) den mehreren Antennenstandorten bereitstellt, wobei das Verfahren umfasst:
Schätzen (302) der Verkehrsbelastung an dem individuellen der mehreren Antennenstandorte (231, 232, 233, 234),
Verteilen (312) der Anzahl von Antennenträgern zu den mehreren Antennenstandorten auf der Grundlage von der geschätzten Verkehrsbelastung an einem individuellen der mehreren Antennenstandorte, wobei die Verkehrsbelastung eines individuellen der mehreren Antennenstandorte (231, 232, 233, 234) durch Abbilden eines Antennenträgers auf zumindest einige der mehreren Antennenstandorte, ein Antennenstandort auf einmal, und durch Überwachen der Verkehrsbelastung durch den Antennenträger von dem abgebildeten Antennenstandort der zumindest einigen der mehreren Antennenstandorte geschätzt wird.

2. Verfahren nach Anspruch 1, wobei die Basisstation (200) ferner eine Basisbandeinheit (210), die eingerichtet ist, die Anzahl der Antennenträger den mehreren Antennenstandorten bereitzustellen, und eine Zwischenfrequenzeinheit, IF-Einheit, (220) umfasst, und wobei die IF-Einheit mit der Basisbandeinheit (210) und mit den mehreren Antennenstandorten (231, 232, 233, 234) verbunden ist.

3. Verfahren nach einem der vorhergehenden Ansprüche, wobei die Verkehrsbelastung an einem individuellen der mehreren Antennenstandorte (231, 232, 233, 234) auf der Grundlage der empfangenen Uplink-Leistung für den individuellen der mehreren Antennenstandorte geschätzt wird (401).

4. Verfahren nach Anspruch 3, das ferner umfasst:
Vergleichen (402) der empfangenen Uplink-Leistung für einen individuellen der mehreren Antennenstandorte mit einer Uplink-Leistungsschwelle,
für die Antennenstandorte, für die die empfangene Uplink-Leistung über der Uplink-Leistungsschwelle liegt, Schätzen der Verkehrsbelastung durch Abbilden (404) eines Antennenträgers auf mindestens einige der mehreren Antennenstandorte, ein Antennenstandort auf einmal, und Überwachen (406) der Verkehrsbelastung durch den Antennenträger und ferner Vergleichen (408) der geschätzten Verkehrsbelastung der Antennenstandorte mit einer hohen Verkehrsbelastungsschwelle, um Antennenstandorte mit Hoher Verkehrsbelastung zu bestimmen (410).

5. Verfahren nach einem der vorhergehenden Ansprüche, das ferner umfasst:
Vergleichen (304) der geschätzten Verkehrsbelastung an einem ersten Antennenstandort der mehreren Antennenstandorte mit einer ersten Verkehrsbelastungsschwelle,
Bestimmen (306), um die Anzahl von Antennenträgern zu den mehreren Antennenstandorten so zu verteilen, dass die Kommunikationskapazität an dem ersten Antennenstandort vergrößert wird, wenn der Vergleich zeigt, dass sich die geschätzte Verkehrsbelastung an dem ersten Antennenstandort auf oberhalb der zweiten Verkehrsbelastungsschwelle geändert hat.

6. Verfahren nach einem der vorhergehenden Ansprüche, das ferner umfasst:
Vergleichen (305) der geschätzten Verkehrsbelastung an einem ersten Antennenstandort der mehreren Antennenstandorte mit einer zweiten Verkehrsbelastungsschwelle,
Bestimmen (310), um die Anzahl von Antennenträgern zu den mehreren Antennenstandorten so zu verteilen, dass die Kommunikationskapazität an dem ersten Antennenstandort verringert wird, wenn der Vergleich zeigt, dass sich die geschätzte Verkehrsbelastung an dem ersten Antennenstandort auf unterhalb der zweiten Verkehrsbelastungsschwelle geändert hat.

7. Verfahren nach einem der vorhergehenden Ansprüche, wobei eine Verkehrsbelastung an einem ersten Antennenstandort der mehreren Antennenstandorte geschätzt wird (302) durch:
Empfangen eines Signals von dem ersten Antennenstandort der mehreren Antennenstandorte, wobei dem Signal eine Kennung angehängt ist, die anzeigt, dass das Signal von dem ersten Antennenstandort empfangen wird, und
Bestimmen, dass das Signal von dem ersten Antennenstandort stammt, auf der Grundlage der Kennung und während einer Messperiode,
Bestimmen der Verkehrsbelastung an dem ersten Antennenstandort auf der Grundlage von der Bestimmung, dass das Signal von dem ersten Antennenstandort stammt.

8. Verfahren nach einem der vorhergehenden Ansprüche, wobei das Verfahren durch die Basisbandeinheit (210) durchgeführt wird.

9. Vorrichtung (1000), die in einer Basisstation (200) in einem drahtlosen Kommunikationssystem betreibbar ist und konfiguriert ist, Kommunikationsressourcen zu mehreren Antennenstandorten (231, 232, 233, 234) der Basisstation zu steuern, wobei die Basisstation eine Basisbandeinheit (210) aufweist, die konfiguriert ist, Kommunikationsressourcen bereitzustellen, wenn eine Anzahl von Antennenträgern IQ-Datenströme (IQ1, IQ2, IQ3) den mehreren Antennenstandorten bereitstellt, wobei die Vorrichtung umfasst:
eine Schätzeinheit (1002) zum Schätzen der Verkehrsbelastung an einem individuellen der mehreren Antennenstandorte (231, 232, 233, 234),
eine Verteilungseinheit (1004) zum Verteilen der Anzahl von Antennenträgern zu den mehreren Antennenstandorten auf der Grundlage der geschätzten Verkehrsbelastung an einem individuellen der mehreren Antennenstandorte,
wobei die Schätzeinheit (1002) eingerichtet ist, die Verkehrsbelastung eines individuellen der mehreren Antennenstandorte (231, 232, 233, 234) durch Abbilden eines Antennenträgers auf zumindest einige der mehreren Antennenstandorte, ein Antennenstandort auf einmal, und durch Überwachen der Verkehrsbelastung durch den Antennenträger von dem abgebildeten Antennenstandort der zumindest einigen der mehreren Antennenstandorte zu schätzen.

10. Vorrichtung nach Anspruch 9, wobei die Schätzeinheit (1002) eingerichtet ist, die Verkehrsbelastung an einem individuellen der mehreren Antennenstandorte (231, 232, 233, 234) auf der Grundlage von der empfangenen Uplink-Leistung für den individuellen der mehreren Antennenstandorte zu schätzen.

11. Vorrichtung nach Anspruch 10, die ferner eine Vergleichseinheit (1006) umfasst, um die empfangene Uplink-Leistung für eine individuelle der mehreren Antennenstandorte mit einer Uplink-Leistungsschwelle zu vergleichen, und wobei für die Antennenstandorte, für die die empfangene Uplink-Leistung über der Uplink-Leistungsschwelle ist, die Schätzeinheit (1002) ferner eingerichtet ist, die Verkehrsbelastung durch Abbilden eines Antennenträgers auf zumindest einige der mehreren Antennenstandorte zu schätzen, einen Antennenstandort auf einmal, und die Verkehrsbelastung durch den Antennenträger zu überwachen, und wobei die Vergleichseinheit (1006) ferner eingerichtet ist, die geschätzte Verkehrsbelastung an den Antennenstandorten mit einer hohen Verkehrsbelastungsschwelle zu vergleichen, um Antennenstandorte mit hoher Verkehrsbelastung zu bestimmen.

12. Vorrichtung nach einem der Ansprüche 9 - 11, die ferner umfasst:
eine Vergleichseinheit (1006) zum Vergleichen der geschätzten Verkehrsbelastung an einem ersten Antennenstandort der mehreren Antennenstandorte mit einer ersten Verkehrsbelastungsschwelle, und
eine Bestimmungseinheit (1008), um zu bestimmen, die Anzahl der Antennenträger auf die mehreren Antennenstandorte so zu verteilen, dass die Kommunikationskapazität an dem ersten Antennenstandort vergrößert wird, wenn der Vergleich zeigt, dass sich die geschätzte Verkehrsbelastung an dem ersten Antennenstandort auf oberhalb der ersten Verkehrsbelastungsschwelle geändert hat.

13. Vorrichtung nach einem der Ansprüche 9 - 12, die ferner umfasst:
eine Vergleichseinheit (1006) zum Vergleichen der geschätzten Verkehrsbelastung an einem ersten Antennenstandort der mehreren Antennenstandorte mit einer zweiten Verkehrsbelastungsschwelle, und
eine Bestimmungseinheit (1008), um zu bestimmen, die Anzahl der Antennenträger auf die mehreren Antennenstandorte so zu verteilen, dass die Kommunikationskapazität an dem ersten Antennenstandort verringert wird, wenn der Vergleich zeigt, dass sich die geschätzte Verkehrsbelastung an dem ersten Antennenstandort auf unterhalb der zweiten Verkehrsbelastungsschwelle geändert hat.

14. Vorrichtung nach einem der Ansprüche 9 - 13, wobei die Schätzeinheit (1002) ferner eingerichtet ist, um die Verkehrsbelastung an einem ersten Antennenstandort der mehreren Antennenstandorte abzuschätzen durch:
Empfangen eines Signals von dem ersten Antennenstandort der mehreren Antennenstandorte, wobei dem Signal eine Kennung angefügt ist, die anzeigt, dass das Signal von dem ersten Antennenstandort empfangen wird, und
Bestimmen, dass das Signal von dem ersten Antennenstandort stammt, auf der Grundlage von der Identifizierung und während einer Messperiode,
Bestimmen der Verkehrsbelastung an dem ersten Antennenstandort auf der Grundlage der Bestimmung, dass das Signal von dem ersten Antennenstandort stammt.

15. Vorrichtung nach einem der Ansprüche 9 - 14, wobei die Vorrichtung in der Basisbandeinheit (210) angeordnet ist.

16. Computerprogramm (1210), das computerlesbare Codemittel umfasst, die, wenn sie in einer Vorrichtung (1000) einer Basisstation (200) läuft, die mehrere Antennenstandorte und eine Basisbandeinheit umfasst, die Kommunikationsressourcen bereitstellt , wenn eine Anzahl von Antennenträgern die IQ-Datenströme den mehreren Antennenstandorten bereitstellt, die Vorrichtung (1000) veranlassen, die folgenden Schritte auszuführen:
Schätzen der Verkehrsbelastung an einen individuellen der mehreren Antennenstandorte, und
Verteilen der Anzahl von Antennenträgern zu den mehreren Antennenstandorten auf der Grundlage von der geschätzten Verkehrsbelastung eines individuellen der mehreren Antennenstandorte,
wobei die Verkehrsbelastung eines individuellen der mehreren Antennenstandorte (231, 232, 233, 234) durch Abbilden eines Antennenträgers auf zumindest einige der mehreren Antennenstandorte, ein Antennenstandort auf einmal, und durch Überwachen der Verkehrsbelastung durch den Antennenträger von dem abgebildeten Antennenstandort der zumindest einigen der mehreren Antennenstandorte geschätzt (302) wird.

17. Computerprogrammprodukt (1208), das ein computerlesbares Medium und ein Computerprogramm (1210) nach Anspruch 16 umfasst, das auf dem computerlesbaren Medium gespeichert ist.

## Revendications

1. Procédé effectué par un appareil dans une station de base (200) dans un système de communication sans fil pour commander des ressources de communication vers une pluralité de sites d'antenne (231, 232, 233, 234) de la station de base, la station de base fournissant des ressources de communication comme un certain nombre de porteuses d'antenne fournissant des flux de données IQ (IQ1, IQ2, IQ3) à la pluralité de sites d'antenne, le procédé comprenant :
l'évaluation (302) de la charge de trafic sur un site individuel de la pluralité de sites d'antenne (231, 232, 233, 234),
la distribution (312) du nombre de porteuses d'antenne vers la pluralité de sites d'antenne sur la base de la charge de trafic évaluée sur un site individuel de la pluralité de sites d'antenne, dans lequel la charge de trafic sur un site individuel de la pluralité de sites d'antenne (231, 232, 233, 234) est évaluée (302) en mettant en correspondance une porteuse d'antenne avec au moins certains de la pluralité de sites d'antenne, un site d'antenne à la fois, et le contrôle de la charge de trafic par l'intermédiaire de la porteuse d'antenne en provenance du site d'antenne mis en correspondance des au moins certains de la pluralité de sites d'antenne.

2. Procédé selon la revendication 1, dans lequel la station de base (200) comprend en outre une unité en bande de base (210) agencée pour fournir le nombre de porteuses d'antenne à la pluralité de sites d'antenne et une unité à fréquence intermédiaire, unité FI, (220) et dans lequel l'unité FI est reliée à l'unité en bande de base (210) et à la pluralité de sites d'antenne (231, 232, 233, 234).

3. Procédé selon l'une quelconque des revendications précédentes, dans lequel la charge de trafic sur un site individuel de la pluralité de sites d'antenne (231, 232, 233, 234) est évaluée (401) sur la base de la puissance en liaison montante reçue pour le site individuel de la pluralité de sites d'antenne.

4. Procédé selon la revendication 3, comprenant en outre :
la comparaison (402) de la puissance en liaison montante reçue pour un site individuel de la pluralité de sites d'antenne à un seuil de puissance en liaison montante,
pour les sites d'antenne pour lesquels la puissance en liaison montante reçue est au-dessus du seuil de puissance en liaison montante, l'évaluation de la charge de trafic en mettant en correspondance (404) une porteuse d'antenne avec au moins certains de la pluralité de sites d'antenne, un site d'antenne à la fois, et le contrôle (406) de la charge de trafic par l'intermédiaire de la porteuse d'antenne, et en outre la comparaison (408) de la charge de trafic évaluée sur les sites d'antenne à un seuil de charge de trafic élevé pour déterminer (410) des sites d'antenne à charge de trafic élevée.

5. Procédé selon l'une quelconque des revendications précédentes, comprenant en outre :
la comparaison (304) de la charge de trafic évaluée sur un premier site d'antenne de la pluralité de sites d'antenne à un premier seuil de charge de trafic,
la détermination (306) pour distribuer le nombre de porteuses d'antenne à la pluralité de sites d'antenne de sorte que la capacité de communication est augmentée au niveau du premier site d'antenne si la comparaison montre que la charge de trafic évaluée sur le premier site d'antenne a changé pour au-dessus du premier seuil de charge de trafic.

6. Procédé selon l'une quelconque des revendications précédentes, comprenant en outre :
la comparaison (305) de la charge de trafic évaluée sur un premier site d'antenne de la pluralité de sites d'antenne à un second seuil de charge de trafic,
la détermination (310) pour distribuer le nombre de porteuses d'antenne à la pluralité de sites d'antenne de sorte que la capacité de communication est diminuée au niveau du premier site d'antenne quand la comparaison montre que la charge de trafic évaluée sur le premier site d'antenne a changé pour au-dessous du second seuil de charge de trafic.

7. Procédé selon l'une quelconque des revendications précédentes, dans lequel une charge de trafic sur un premier site d'antenne de la pluralité de sites d'antenne est évaluée (302) par :
la réception d'un signal en provenance du premier site d'antenne de la pluralité de sites d'antenne, signal auquel on a ajouté une identification indiquant que le signal est reçu en provenance du premier site d'antenne, et
la détermination que le signal provient du premier site d'antenne sur la base de l'identification et, pendant une période de mesure,
la détermination de la charge de trafic sur le premier site d'antenne sur la base de la détermination que le signal provient du premier site d'antenne.

8. Procédé selon l'une quelconque des revendications précédentes, dans lequel le procédé est effectué par l'unité en bande de base (210).

9. Appareil (1000) pouvant être mis en oeuvre dans une station de base (200) dans un système de communication sans fil, configuré pour commander des ressources de communication pour une pluralité de sites d'antenne (231, 232, 233, 234) de la station de base, la station de base ayant une unité en bande de base (210) configurée pour fournir des ressources de communication comme un certain nombre de porteuses d'antenne fournissant des flux de données IQ (IQ1, IQ2, IQ3) à la pluralité de sites d'antenne, l'appareil comprenant :
une unité d'évaluation (1002) pour évaluer la charge de trafic sur un site individuel de la pluralité de sites d'antenne (231, 232, 233, 234),
une unité de distribution (1004) pour distribuer le nombre de porteuses d'antenne à la pluralité de sites d'antenne sur la base de la charge de trafic évaluée sur un site individuel de la pluralité de sites d'antenne,
dans lequel l'unité d'évaluation (1002) est agencée pour évaluer la charge de trafic sur le site individuel de la pluralité de sites d'antenne (231, 232, 233, 234) en mettant en correspondance une porteuse d'antenne avec au moins certains de pluralité de sites d'antenne, un site d'antenne à la fois, et pour contrôler la charge de trafic par l'intermédiaire de la porteuse d'antenne à partir du site d'antenne mis en correspondance des au moins certains de la pluralité de sites d'antenne.

10. Appareil selon la revendication 9, dans lequel l'unité d'évaluation (1002) est agencée pour évaluer la charge de trafic sur un site individuel de la pluralité de sites d'antenne (231, 232, 233, 234) sur a base de la puissance en liaison montante reçue pour le site individuel de la pluralité de sites d'antenne.

11. Appareil selon la revendication 10, comprenant en outre une unité de comparaison (1006) pour comparer la puissance en liaison montante reçue pour le site individuel de la pluralité de sites d'antenne à un seuil de puissance en liaison montante et, pour les sites d'antenne pour lesquels la puissance en liaison montante reçue est au-dessus du seuil de puissance en liaison montante, l'unité d'évaluation (1002) étant en outre agencée pour évaluer la charge de trafic en mettant en correspondance une porteuse d'antenne avec au moins certains de la pluralité de sites d'antenne, un site d'antenne à la fois, et pour contrôler la charge de trafic par l'intermédiaire de la porteuse d'antenne, et l'unité de comparaison (1006) étant en outre agencée pour comparer la charge de trafic évaluée sur les sites d'antenne à un seuil de charge de trafic élevé pour déterminer des sites d'antenne à charge de trafic élevée.

12. Appareil selon l'une quelconque des revendications 9 à 11, comprenant en outre :
une unité de comparaison (1006) pour comparer la charge de trafic évaluée sur un premier site d'antenne de la pluralité de sites d'antenne à un premier seuil de charge de trafic, et
une unité de détermination (1008) pour déterminer la distribution du nombre de porteuses d'antenne à la pluralité de sites d'antenne de sorte que la capacité de communication est augmentée au niveau du premier site d'antenne si la comparaison montre que la charge de trafic évaluée sur le premier site d'antenne a changé pour au-dessus du premier seuil de charge de trafic.

13. Appareil selon l'une quelconque des revendications 9 à 12, comprenant en outre :
une unité de comparaison (1006) pour comparer la charge de trafic évaluée sur un premier site d'antenne de la pluralité de sites d'antenne à un second seuil de charge de trafic, et
une unité de détermination (1008) pour déterminer la distribution du nombre de porteuses d'antenne à la pluralité de sites d'antenne de sorte que la capacité de communication est diminuée au niveau du premier site d'antenne quand la comparaison montre que la charge de trafic évaluée sur le premier site d'antenne a changé pour au-dessous du second seuil de charge de trafic.

14. Appareil selon l'une quelconque des revendications 9 à 13, dans lequel l'unité d'évaluation (1002) est en outre agencée pour évaluer la charge de trafic sur un premier site d'antenne de la pluralité de sites d'antenne par :
la réception d'un signal en provenance du premier site d'antenne de la pluralité de sites d'antenne, signal auquel on a ajouté une identification indiquant que le signal est reçu en provenance du premier site d'antenne, et
la détermination que le signal provient du premier site d'antenne sur la base de l'identification et, pendant une période de mesure,
la détermination de la charge de trafic sur le premier site d'antenne sur la base de la détermination que le signal provient du premier site d'antenne.

15. Appareil selon l'une quelconque des revendications 9 à 14, dans lequel l'appareil est agencé dans l'unité en bande de base (210).

16. Programme informatique (1210) comprenant un moyen formant code lisible par ordinateur, qui lorsqu'il s'exécute dans un appareil (1000) d'une station de base (200) comprenant une pluralité de sites d'antenne et une unité en bande de base fournissant des ressources de communication comme un certain nombre de porteuses d'antenne fournissant des flux de données IQ à la pluralité de sites d'antenne, amène l'appareil (1000) à effectuer les étapes suivantes :
l'évaluation de la charge de trafic sur un site individuel de la pluralité de sites d'antenne, et
la distribution du nombre de porteuses d'antenne à la pluralité de sites d'antenne sur la base de la charge de trafic évaluée sur un site individuel de la pluralité de sites d'antenne,
dans lequel la charge de trafic sur un site individuel de la pluralité de sites d'antenne (231, 232, 233, 234) est évaluée (302) en mettant en correspondance une porteuse d'antenne avec au moins certains de la pluralité de sites d'antenne, un site d'antenne à la fois, et en contrôlant la charge de trafic par l'intermédiaire de la porteuse d'antenne du site d'antenne mis en correspondance des au moins certains de la pluralité de sites d'antenne.

17. Produit formant programme informatique (1208), comprenant un support lisible par ordinateur et un programme informatique (1210) selon la revendication 16 stocké sur le support lisible par ordinateur.
